# EUROPEAN PATENT APPLICATION

(11) **EP 0 624 043 A1**
(43) Date of publication of application: **09.11.1994**
(21) Application number: 94301880.4
(22) Date of filing: 16.03.1994
(51) Int. Cl.: H04Q 1/14

(54) **Cable management system**

(30) Priority: 03.05.1993 US 58190
(71) Applicant: THE WHITAKER CORPORATION, Wilmington, Delaware 19808 (US)
(72) Inventor: Wise, James Henry, Palmyra, Pennsylvania 17078 (US)
(74) Representative: Warren, Keith Stanley

(57) **Abstract**

A cable management system provides routing of wired services between service lines (16) and user lines (18) under computer control. Each service line (16) enters the cable management system at a service termination unit card (22) which also holds a portion of a crosspoint switch matrix. Each user line (18) enters the cable management system at a line termination unit card (20). The service termination unit cards (22) are all mounted to a first side of a centerplane board (24) as a vertically oriented stacked array and the line termination unit cards (20) are mounted to tne other side of the centerplane board (24) as a horizontally oriented stacked array. Pins extending through the centerplane board (24) interconnect the cards (20,22) so that any service line (16) can be connected to any user line (18). A management station computer (14) is provided, by means of which an operator can control the system to connect a specified service line (16) to a specified user line (18) and also to disconnect a specified service line from a specified user line.

## Description

This invention relates to the distribution of wiring and, more particularly, to a cable management system which provides routing of telephony, low and high speed data, power and video, between service lines and user lines under computer control.

When wiring a commercial building, it is conventional that all of the services carried by wire, such as telephony, low and high speed data, power and video, enter the building for termination at respective patch panels. The patch panels are typically located within wiring closets and include a first array of terminations for the service lines which enter the building and a second array of terminations for the user lines which extend within the building to various user stations. Within each patch panel, the connections between the service lines and the user lines are made manually via jumper wires extending between the first array of terminations and the second array of terminations. In an ideal situation, records would be maintained as to where each wire goes within the building and to what it is connected. However, since the real world is not ideal, such records are not always properly maintained. In addition, wires are often tagged at the patch panels and the tags are lost or become outdated because of lack of updating. Therefore, when a technician is given a service order to add, move or change a connection, the technician must first determine exactly which physical wires are involved. This has proven to be a very time consuming and labor intensive chore. It is therefore an object of the present invention to provide a cable management system with automatic record keeping capability.

In addition to the record keeping problem, the conventional patch panel approach results in a jumble of wires which makes it difficult physically to access the service line and user line termination arrays. It is therefore another object of the present invention to provide a cable management system which eliminates the use of jumper wires to cross-connect the service and user lines.

It is a further object of the present invention to provide a cable management system wherein different types of services can be accommodated and connected to only those user lines suitable therefor.

It is yet another object of the present invention to provide a cable management system wherein after a building has been initially wired, subsequent additions, moves and changes can be effected remotely without requiring a technician manually to make connections.

The foregoing and additional objects of the present invention are attained in accordance with the principles of this invention by providing a cable management system interposed between a plurality of service lines and a plurality of user lines. The cable management system includes a plurality of line termination units mounted on circuit cards which provide connections to the user lines and service termination units which are mounted on circuit cards and provide connections to the service lines. Controllable switching means are coupled between the terminations to the user lines and the service lines for selectively providing physical electrical connections between selected ones of the service lines and selected ones of the user lines. A controller is provided to control the switching means to selectively make and open connections between the service lines and the user lines in accordance with received commands, the controller having a memory in which is stored a map of the connections made through the switching means. A management station is provided for issuing commands to the controller, the commands including a connect command to make a physical electrical connection through the switching means between a specified service line and a specified user line, and a disconnect command to open a physical electrical connection through the switching means between one or more specified service lines and one or more specified user lines. The management station includes a computer with a display screen and has a graphical user interface by means of which an operator can identify a location on the computer display screen to effect the issuance of a selected command to the controller.

In accordance with an aspect of this invention, the switching means comprises a matrix of switch crosspoints arranged in a rectangular array, each of the crosspoints being at a respective intersection of one of a set of columns of crosspoints and one of a set of rows of crosspoints.

In accordance with another aspect of this invention, a centerplane board is provided having a first plurality of card edge connectors on a first side of the centerplane board arranged in a first parallel stacked array and a second plurality of card edge connectors on the other side of the centerplane board arranged in a second parallel stacked array orthogonal to the first parallel array. The first and second pluralities of card edge connectors are electrically interconnected through the centerplane board. The switching means are mounted on the circuit cards associated with the service termination units and these cards are installed in the card edge connectors on a first side of the centerplane board. The line termination unit cards are installed in the card edge connectors on the other side of the centerplane board. Accordingly, any one or more of the plurality of service lines can be connected to any one or more of the plurality of user lines through the matrix of switch crosspoints.

In accordance with a further aspect of this invention, the controller is mounted on a circuit card and installed in one of the card edge connectors on the first side of the centerplane board. A plurality of conductive bus lines is disposed on the centerplane board and electrically interconnected to all the card edge connectors on both sides of the centerplane board. A respective transceiver coupled to the bus lines is provided on each of the cards for the controller, the service termination units and the line termination units for effecting communications therebetween over the bus lines.

A connection system comprising a matrix of connections of user lines and service lines for transmitting media specific communications services among the user lines, and switches for connecting and disconnecting respective ports for the user lines and respective ports for the service lines, a command activated controller coupled to the switches to connect and disconnect the ports with respective ports upon command as generated by a computer, a memory in the controller storing a record of connection and disconnection states of each of the ports and, a computer linked to the controller and the memory, the computer comprising; an image depicting screen and a graphical user interface capable of identifying the connection and disconnection states of each of the ports by areas on a corresponding image on the screen, and a command initiating input device of the computer capable of selection of one of the areas by the input device for initiating a command to activate the controller to connect and disconnect selected ports being identified by the corresponding image.

An embodiment of the present invention will now be described by way of example with reference to the accompanying drawings in which like elements in different figures thereof are identified by the same reference numeral and wherein:
FIGURE 1 is a conceptual drawing showing a cable management system constructed in accordance with the principles of this invention;
FIGURE 2 is a block diagram of the cable management system of FIG. 1;
FIGURE 3A schematically depicts the rear of the interior of the cable management system enclosure showing the service termination unit cards and the controller cards;
FIGURE 3B schematically depicts the front of the interior of the cable management system enclosure showing the line termination unit cards;
FIGURE 3C shows a first side of the centerplane board, which side is adapted to mount the service termination unit cards and the controller cards;
FIGURE 3D shows the other side of the centerplane board, which side is adapted to mount the line termination unit cards;
FIGURE 3E schematically illustrates orthogonal edge connections of a service termination unit card and a line termination unit card to the centerplane board;
FIGURE 4 is a block diagram of an illustrative controller for the cable management system of FIG 2;
FIGURE 5 is a block diagram showing the circuitry on an illustrative line termination unit card for the cable management system of FIG. 2;
FIGURE 6 is a block diagram showing the circuitry on an illustrative service termination unit card for the cable management system of FIG. 2; and
FIGURES 7A-7D show an illustrative sequence of screens provided on the display screen of the management station computer by the graphical user interface according to this invention.

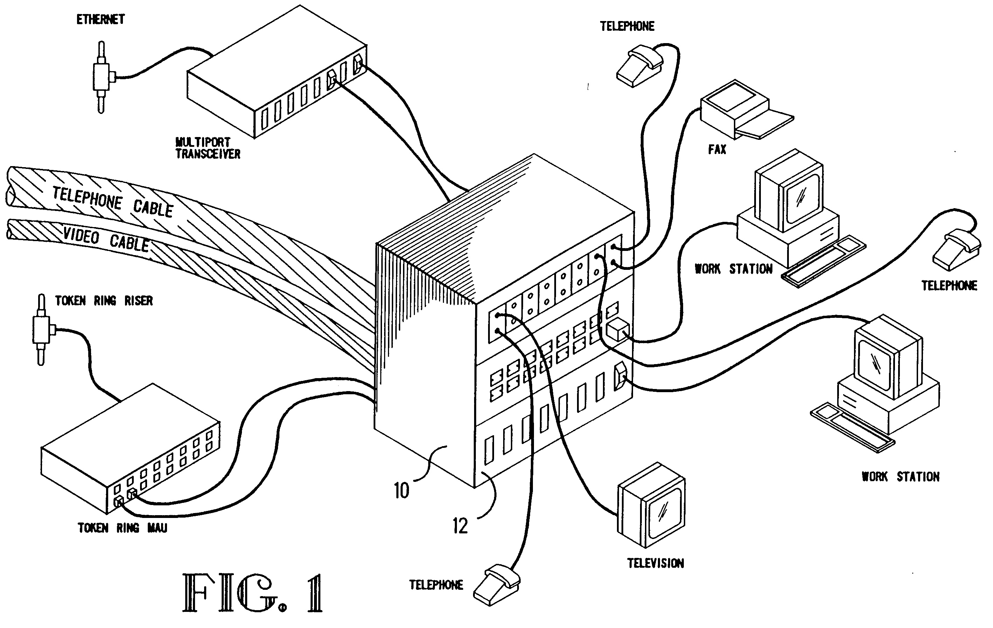

As shown in FIG. 1, the cable management system according to the present invention is contained within an enclosure 10 illustrated as having media-specific connectors on both its front surface 12 and its rear surface (not shown). The cable management system within the enclosure 10 serves as a flexible electronic patching, or cross-connecting, hub for automated cable management of communications circuits. Various services, such as LAN'S, telephone, computer I/O channels and peripherals, and video distribution links are connected to the cable management system through media-specific connectors on the rear surface of the enclosure 10. Typically, these will be aggregated multi-pair cables or high bandwidth cables, such as coax and fiber, common in riser and horizontal distribution subsystems. As shown in FIG. 1, such services include Ethernet, telephone, video and token ring.

Matrix switch modules are installed within the enclosure 10. Media-specific connectors corresponding to the media selected for each user's work station subsystem wiring are installed on the front surface 12 and have cables which are attached and then run to the user's location. Thus, as shown in FIG. 1, at the user's location there may be one or more telephones, computer work stations, facsimile machines, or television sets. Once wired in this fashion, each user can be electronically connected to any combination of services that is required. All future changes in each user's service complement can be accomplished electronically.

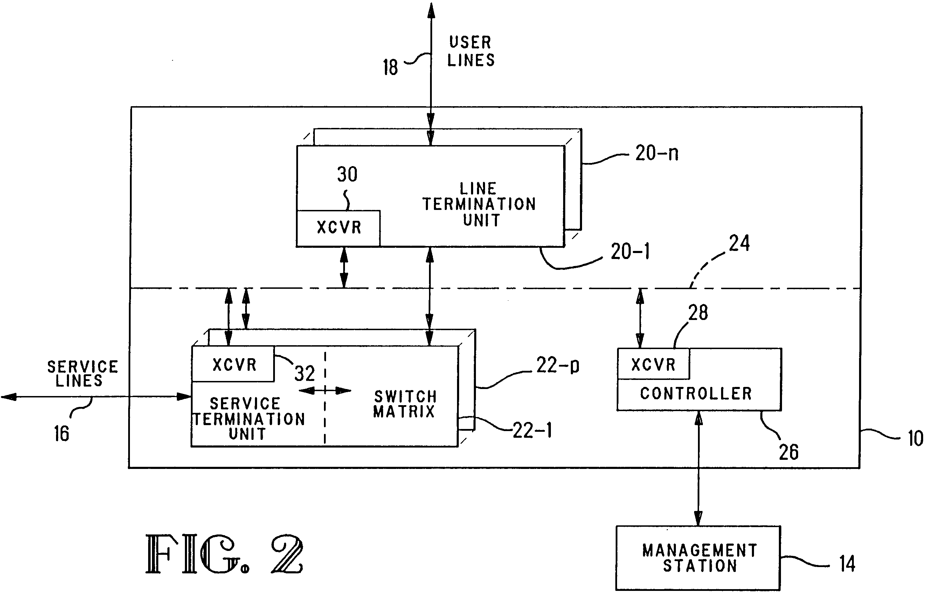

The cable management system within the enclosure 10 maintains a data base of the location, source and destination for each cable. The system can be configured by a management station 14 (FIG. 2). As shown in FIG. 2, the cable management system contained within the enclosure 10 is connected to the service lines 16, which may be telephone lines, video lines, etc., which come to the system from the various service providers. The cable management system is also connected to the user lines 18 which extend to various user locations. The user lines 18 are each connected to a respective port on one of a plurality of line termination unit cards 20-1,...,20-n. Similarly, the service lines 16 are each connected to a respective port on one of a plurality of service termination unit cards 22-1,...,22-p.

The switching matrix for connecting the service lines 16 to the user lines 18 is distributed among the service termination unit cards 22-1,...,22-p so that each of the service termination unit cards 22-1,...,22-p includes thereon a plurality of service termination units for connection to a group of the service lines 16 and a portion of the overall switch matrix. The line termination unit cards 20-1,...,20-n and the service termination unit cards 22-1,...,22-p are installed on opposite sides of a centerplane board 24, represented schematically in FIG. 2 by a dot-dash line, in such a manner that every line termination unit card 20-1,..., 20-n is connected to the switch matrix portion of every service termination unit card 22-1,...,22-p, as will be described in full detail hereinafter.

Within the enclosure 10, there is also provided a controller card 26 which is mounted to the centerplane board 24 on the same side thereof as the service termination unit cards 22-1,...,22-p. The controller card 26 is connected to the management station 14 in a suitable manner, such as through an RS-232 link or a modem. To effect communications between the controller card 26, the line termination unit cards 20-1,...,20-n, and the service termination unit cards 22-1,...,22-p, a communications bus is provided on the centerplane board 24. Each of the controller card 26, the line termination unit cards 20-1,...,20-n, and the service termination unit cards 22-1,...,22-p, is provided with a respective transceiver 28, 30 and 32 which is coupled to the communications bus when the respective card is mounted to the centerplane board 24.

Each of the service termination unit cards 22-1,..., 22-p includes a memory which contains a map of all the connections through the switch matrix portion on the respective card, and the controller 26 includes a memory which contains a map of all of the connections in the entire cable management system within the enclosure 10. The management station 14 issues commands to the controller 26. These commands include a connect command to make a connection between one or more specified service lines 16 and one or more specified user lines 18, and a disconnect command to open a connection between a specified one of the service lines 16 and a specified one of the user lines 18. The controller 26 places each appropriate command onto the communications bus on the centerplane board 24, from which it is received by the transceiver 32 on the specified one of the service termination unit cards 22-1,...,22-p, which then controls its respective switch matrix portion in accordance with the received command to either make or open the connection.

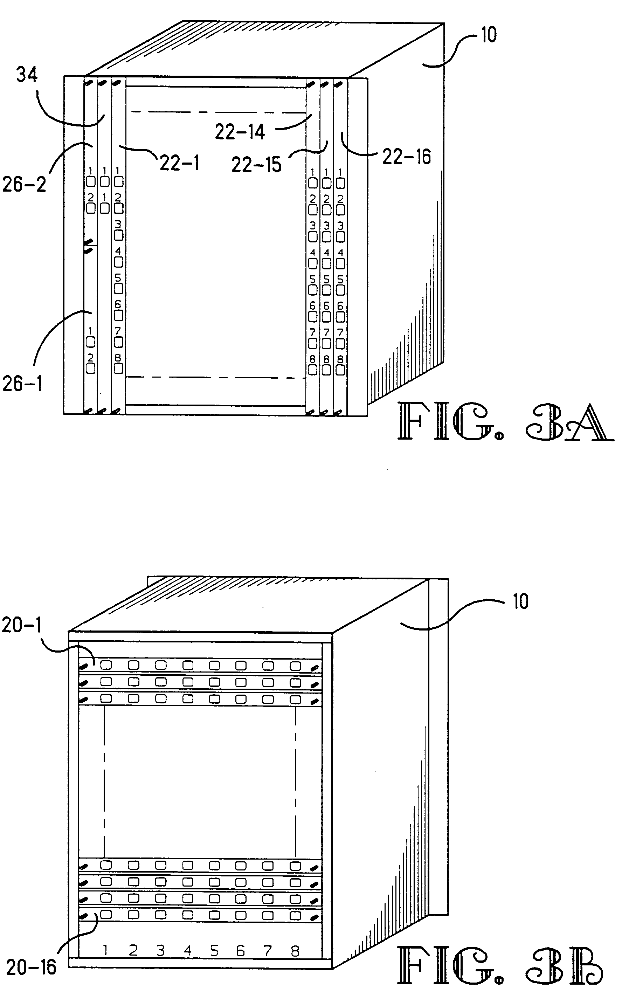

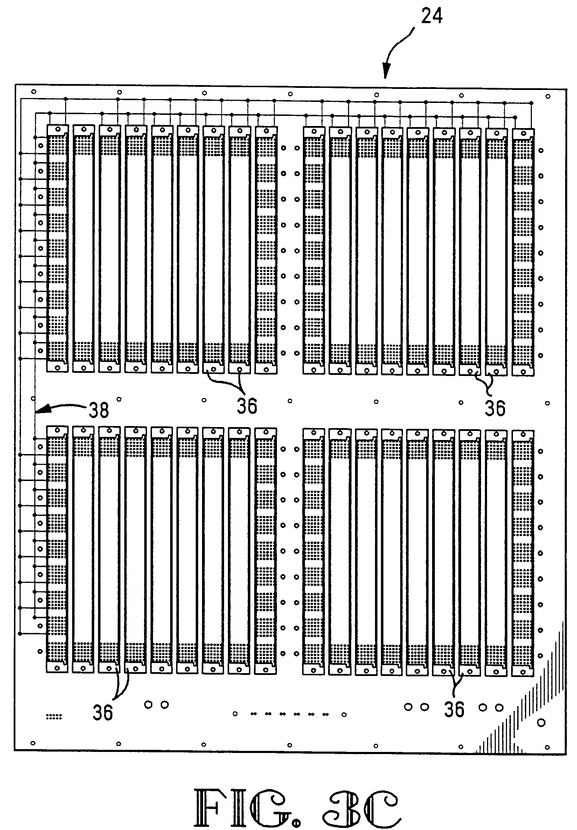

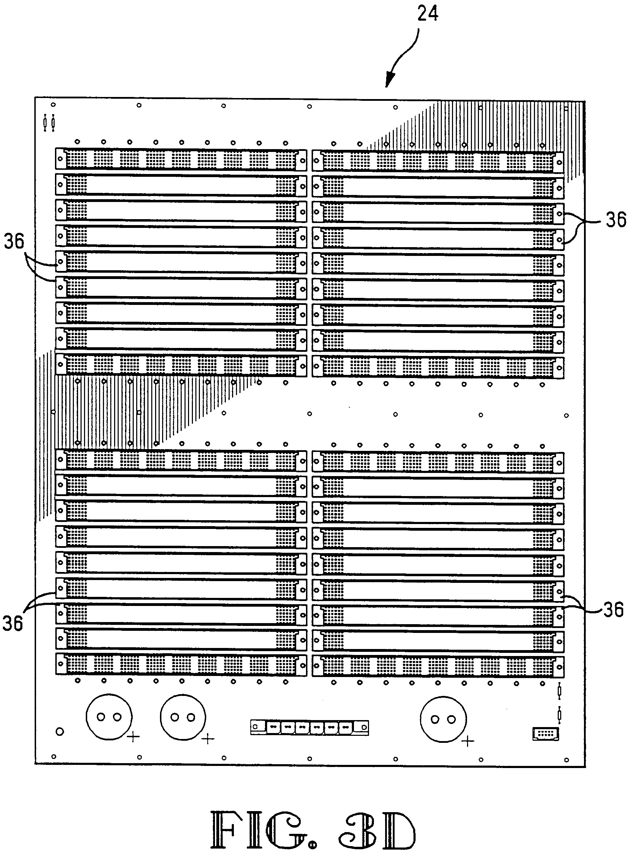

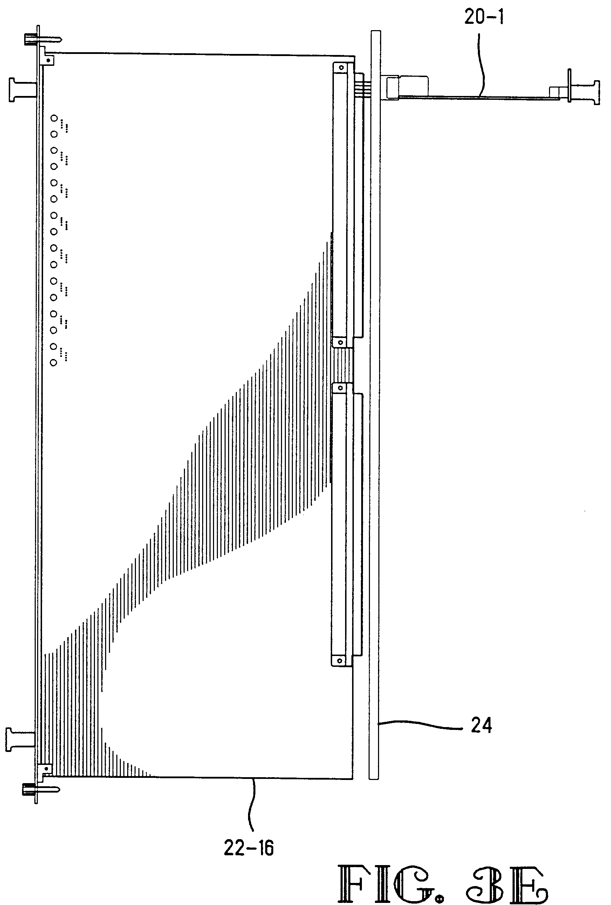

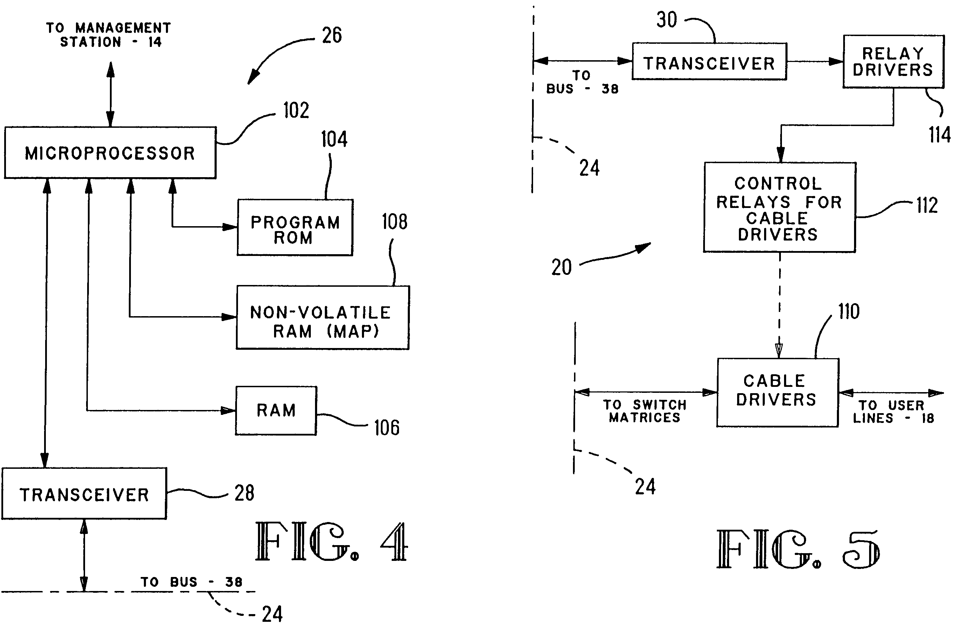

As shown in FIG. 3A, there are illustratively sixteen service termination unit cards 22-1,...,22-16 which are installed vertically in the enclosure 10 from the rear thereof. In addition, the controller 26, which is comprised of two half-cards 26-1 and 26-2, are also installed vertically, as is an additional controller card 34, which plays no part in the present invention. As shown in FIG. 3B, there are illustratively sixteen line termination unit cards 20-1,...,20-16 which are installed horizontally in the enclosure 10 from the front thereof. Each of the line termination unit cards 20-1,...,20-16 and the service termination unit cards 22-1,...,22-16 has eight ports terminated by a respective media-specific connector on the visible edge of the card.

FIGS. 3C and 3D illustrate opposite sides of the centerplane board 24. Specifically, FIG. 3C shows the side of the centerplane board 24 on which the service termination unit cards and the controller cards are mounted and FIG. 3D shows the side of the centerplane board 24 on which the line termination unit cards are mounted. Thus, as shown in FIG. 3C, for each of the service termination unit cards and the controller cards there is provided a pair of vertically oriented card edge connectors 36. Likewise, as shown in FIG. 3D, on the other side of the centerplane board 24 there is provided for each of the line termination unit cards a pair of horizontally oriented card edge connectors 36. Each of the card edge connectors 36 has within it nine fields, each of which is made up of a 6x6 square matrix of pins. The pins extend through the centerplane board 24 to a corresponding field in one of the card edge connectors 36 on the other side of the board 24.

Illustratively, each of the service termination unit cards 22-1,...,22-16 and the line termination unit cards 20-1,...,20-16 has eight input/output ports. Each of these ports is a four wire port and each of the four wires of each port of the line termination unit cards is connected to each of sixteen of the pin fields in the pair of connectors 36 to which its card is connected. This accounts for 8 x 4 = 32 of the 36 pins of each field. The remaining four pins in each of those sixteen pin fields are reserved for power, ground and control signals. Similarly, each of the four wires of a service termination unit card port is connected to the switch matrix portion on that service termination unit card. The outputs of each card's switch matrix portion are eight 4-wire bundles which are each connected to four pins of each of sixteen of the pin fields of the connector 36 associated with that service termination unit card. Again, that accounts for 32 of the 36 pins in each of those sixteen pin fields, with the remaining four pins being reserved for power, ground and control signals.

Because of the orthogonal relationship of the connectors 36 on both sides of the centerplane board 24, every port of a line termination unit card is connected to a pin field connected to every one of the service termination unit cards on the other side of the centerplane board 24. Thus, FIG. 3E illustrates how line termination unit card 20-1 is connected to a pin field of service termination unit card 22-16, as well as to all corresponding pin fields of all the other fifteen service termination unit cards. Illustratively, the line termination unit cards 20-1,...,20-16 take up the second through the seventeenth rows of the horizontal connectors 36 on their side of the centerplane board 24. The top and bottom rows are vacant. Similarly, the service termination unit cards 22-1,...,22-16 take up the third through the eighteenth columns of the vertical connectors 36 on their side of the board 24. Thus, through the switch matrices on the service termination unit cards, any one of the service lines 16 can be connected to any one of the user lines 18. In the illustrative embodiment, there are sixteen service termination unit cards, each with eight ports, for a total of 128 service ports and there are sixteen line termination unit cards, each having eight ports, for a total of 128 user ports. Each switch matrix portion on a service termination unit card is an eight port by 128 port (32 by 512 lines) matrix of crosspoints. Thus, as disclosed, each of the 128 service lines can be connected to each of the 128 user ports.

As shown schematically in FIG. 3C, there is a multi-wire communications bus 38 on the centerplane board 24. The bus 38 extends parallel to the leftmost column of the vertical connectors 36 and parallel to the upper row of the horizontal connectors 36 (not shown in FIG. 3C) on the other side of the board 24. In order that the transceivers 28, 30 and 32 may be interconnected, the bus 38 is terminated at the pin fields in the rows two through seventeen of the leftmost column for connection to the transceivers 30 on all of the line termination unit cards 20-1,...,20-16; at the upper pin fields in the columns three through eighteen for connection to the transceivers 32 on all of the service termination unit cards 22-1,...,22-16; and at the upper pin field of the first column for connection to the transceiver 28 of the controller 26.

FIG. 4 illustrates a controller 26 which may be utilized in the cable management system according to this invention. The controller 26 includes a microprocessor 102 which is associated with three different types of memory. The first memory is a program read only memory (ROM) 104 which has stored therein the program instructions for operating the microprocessor 102. The microprocessor 102 is also associated with a random access memory (RAM) 106 which is utilized as a temporary storage memory by the microprocessor 102. Lastly, there is a non-volatile random access memory 108 which is utilized to store a map showing all of the connections through the switch matrix portions on the service termination unit cards 22-1,..., 22-p. The non-volatile RAM 108 is an electrically erasable ROM (sometimes called a "flash" PROM) which saves its contents even when power is lost. Since it takes a relatively long time to write information into the non-volatile RAM 108, the RAM 106 is used to temporarily store the map until such time as it is written into the non-volatile RAM 108.

The microprocessor 102 is coupled to the management station 14 in any suitable manner, such as by an RS-232 link or a modem, or through a local area network. The microprocessor 102 receives commands from the management station 14, such as a connect command or a disconnect command as described above, and in accordance with the program stored in the ROM 104 transmits instructions over the bus lines 38 on the centerplane board 24 via the transceiver 28. Illustratively, the transceiver 28 is a Neuron chip manufactured by Echelon Corp. The microprocessor 102 addresses a specified one of the service termination unit cards 22-1,...,22-p over the bus 38 via the transceiver 28 and provides an appropriate instruction for controlling the switch matrix portion of that service termination unit card. The microprocessor 102 receives acknowledgements of its instructions, which are returned over the bus 38 from the specified service termination unit card, via the transceiver 28 and updates the map stored in the non-volatile RAM 108.

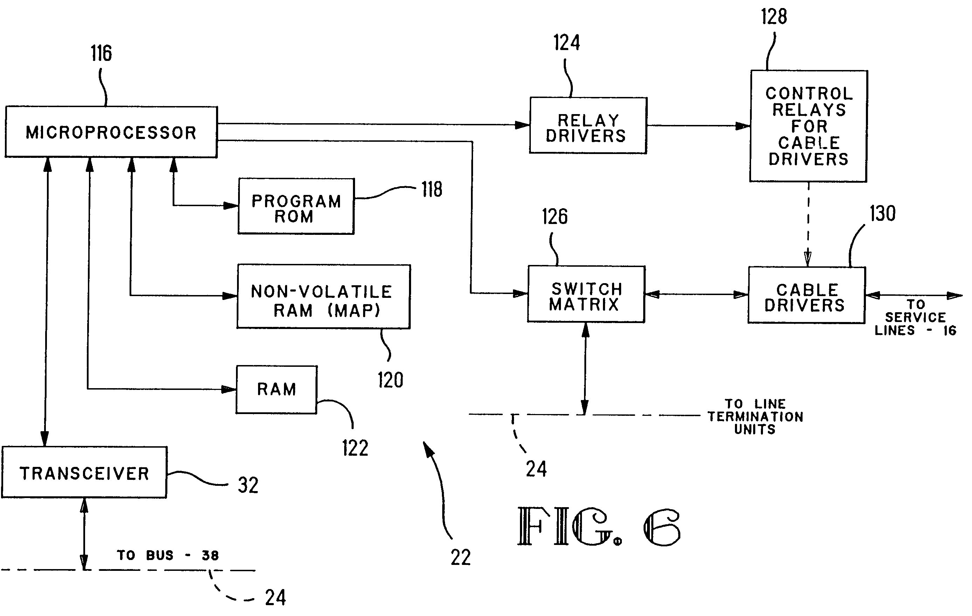

The line termination unit card 20 illustrated in FIG. 5 includes the transceiver 30 coupled to the bus lines 38 on the centerplane board 24. Illustratively, the transceiver 30 is a Neuron chip manufactured by Echelon Corp. The function of the line termination unit card 20 is to provide interfaces between the user lines 18 and the switch matrices on the service termination unit cards 22-1,...,22-p mounted on the other side of the centerplane board 24. This interfacing takes place through the cable drivers (amplifiers) 110 which are selectively controllable to pass signals either from individual ones of the service lines 16 to individual ones of the user lines 18 or in the reverse direction from individual ones of the user lines 18 to individual ones of the service lines 16, as determined by the settings of respective ones of the control relays 112. The control relays 112 are controlled by the relay drivers 114 which are operated on the basis of instructions received via the transceiver 30 from the microprocessor 102 of the controller 26 over the bus lines 38 on the centerplane board 24. Initially, all the cable drivers 110 are set to pass signals in the direction from the user lines 18 to the service lines 16. This is for safety reasons so that upon system start-up dangerously high amplified signals are not inadvertently transmitted to the user lines 18, where they could damage sensitive equipment.

FIG. 6 illustrates the circuitry 22 on one of the service termination unit cards 22-1,...,22-p. This circuitry includes a microprocessor 116 having associated therewith three types of memory. There is a program ROM 118, a non-volatile RAM 120 and a RAM 122. These memories function similarly to the memories 104, 106 and 108 associated with the microprocessor 102 of the controller 26, but are specifically for the particular one of the service termination unit cards 22-1,...,22-p with which they are associated. The microprocessor 116 is coupled to the transceiver 32, which is illustratively a Neuron chip manufactured by Echelon Corp. The transceiver 32 is coupled to the bus lines 38 on the centerplane board 24 and is utilized for the communications between the microprocessor 116 and the microprocessor 102 on the controller card 26. Instructions received by the microprocessor 116 via the transceiver 32 over the bus 38 from the microprocessor 102 are utilized to control the relay drivers 124 and the switch matrix 126. The relay drivers 124 set the control relays 128 so that the cable drivers 130 interposed between the service lines 16 and the switch matrix 126 are "pointing" in the proper directions. Again, as with the cable drivers 110 associated with the line termination unit cards 20-1,...,20-n, the cable drivers 130 are initially set to "point" away from the user lines. The switch matrix 126 is connected to all of the line termination unit cards 20-1,...,20-n mounted on the other side of the centerplane board 24, as previously described, so that any one of the service lines 16 entering that particular service termination unit card may be connected to any one of the user lines 18. In accordance with instructions received from the microprocessor 102 on the controller card 26, the microprocessor 116 controls the switch matrix 126 to make an appropriate physical electrical connection therethrough between a specified one of the service lines 16 entering that card and a specified one of the user lines 18 entering one of the line termination unit cards 20-1,...,20-n on the other side of the centerplane board 24.

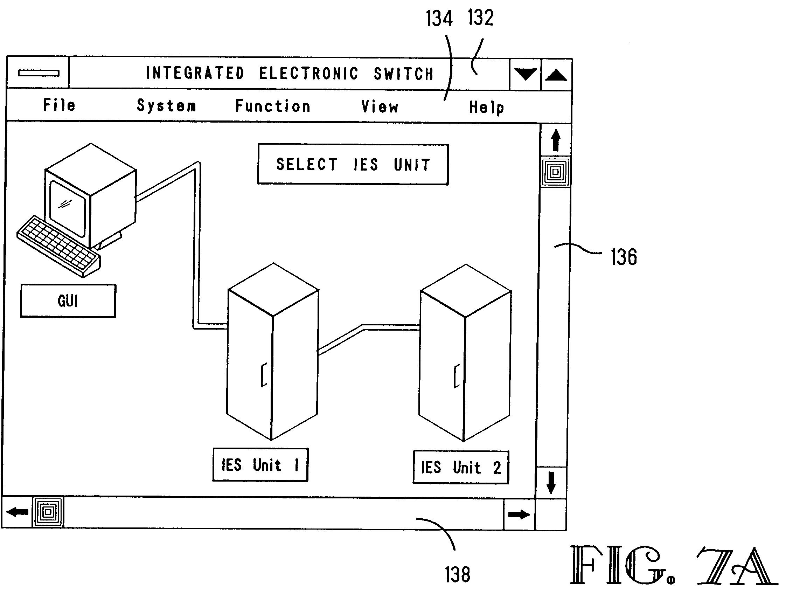

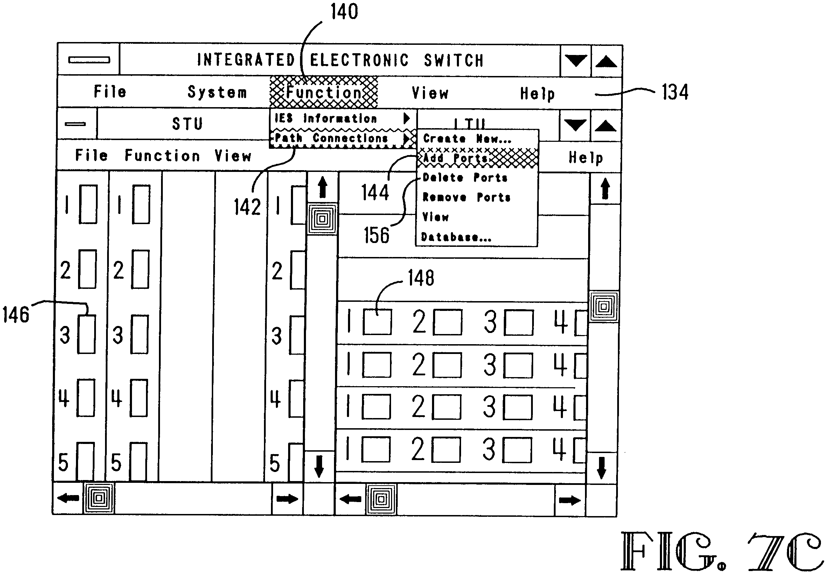

Control of the cable management system described above is effected via the management station 14 which is a computer having a graphical user interface (GUI). The computer of the management station 14 illustratively is provided with the WINDOWS operating system sold by Microsoft Corporation and its software is preferably written as an Object Oriented Program using the C++ language. Accordingly, as the operator of the management station 14 sits in front of the computer, a sequence of visual screens are provided on the display screen of the computer and all operations are effected in dependence upon the area of the screen which is "clicked" by the mouse input device of the computer. FIGS. 7A-7D show an illustrative sequence of such screens for the generation of a connect or disconnect command.

FIG. 7A illustrates a screen which is displayed automatically upon start up of the management station 14. At the top of the screen is a title bar 132 which identifies the cable management system illustratively as an "Integrated Electronic Switch". The screen is in the standard WINDOWS format and includes a menu bar 134 below the title bar 132. The remainder of the screen has icons depicting the system configuration. In this case, there is a single management station having a graphical user interface which is utilized to control two cable management system enclosures. The operator is asked to select which unit is to be controlled and does so by moving a mouse (not shown) so that the arrow cursor is pointing to the desired unit and then clicking the switch on the mouse. The vertical scroll bar 136 and the horizontal scroll bar 138 are utilized in the event that the depiction of the system cannot fit on a single screen so that the screen "window" can be moved to a desired location in the overall picture.

For security purposes, only selected operators would be empowered to have access to certain parts of the system. Therefore, although not shown, there would be provided a log-in screen (sometimes called a Login Dialog Box) by means of which the operator would be asked for an identification number and a password before being allowed to proceed further.

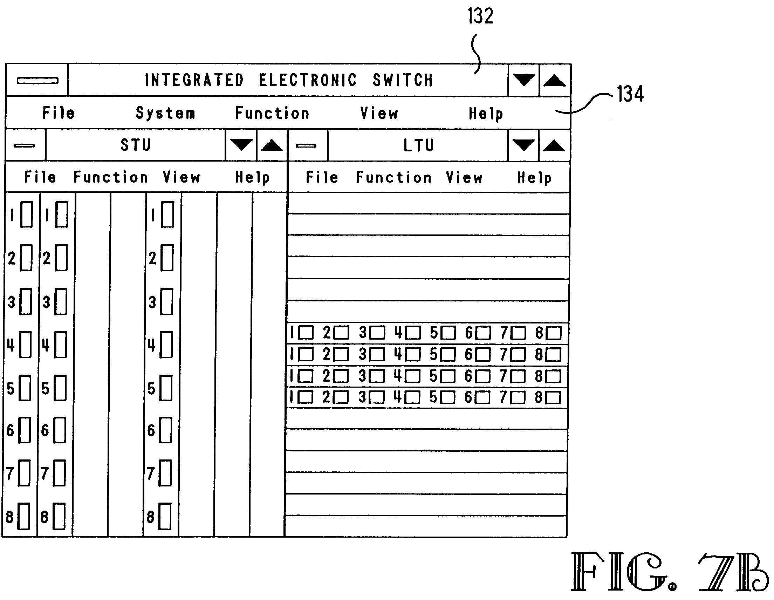

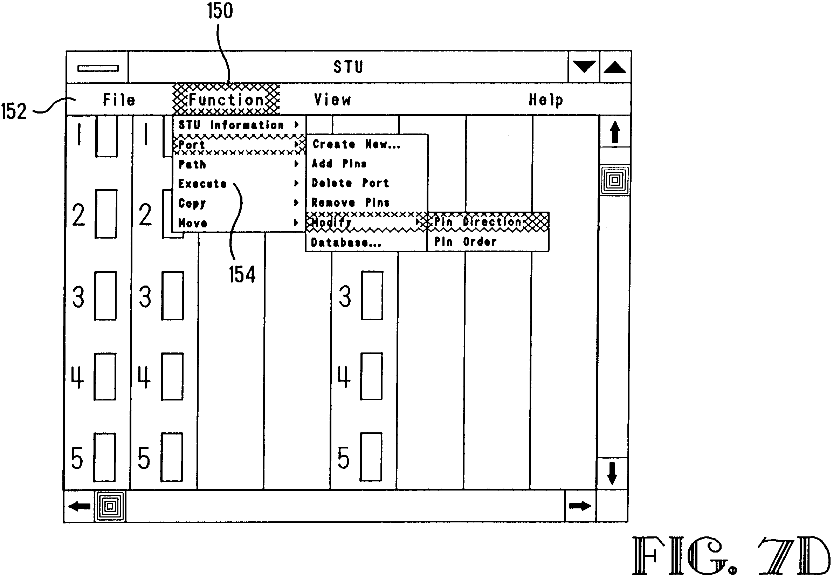

FIG. 7B shows an illustrative screen that would appear after the operator has selected a particular cable management system enclosure. Below the menu bar 134 there is displayed the arrangement of the service termination unit (STU) cards and the line termination unit (LTU) cards, each being illustrated as having eight ports. FIG. 7C illustrates a screen in the sequence subsequent to the screen of FIG. 7B after the FUNCTION box 140 in the menu bar 134 has been selected, after the PATH CONNECTIONS box 142 in the pull down menu has been selected; after the ADD PORTS box 144 in the pull down submenu has been selected; and after an STU port 146 and an LTU port 148 have been selected. All of these selections are indicated by hatching in FIG. 7C. As shown in FIG. 7D, using the FUNCTION box 150 of the STU menu bar 152, by clicking on the EXECUTE box 154 whatever had previously been selected is converted by the management station 14 into a command which is sent to the controller 26. Thus, if the ADD PORTS box 144 (FIG. 7C) had been selected, then a connect command would be generated to effect the connection of the STU port 146 to the LTU port 148. On the other hand, if the DELETE PORT box 156 (FIG. 7C) had been selected, then a disconnect command would be generated.

Although not described in full detail herein, the system map which is stored in the non-volatile RAM 108 of the controller 26 is also provided for storage within the management station 14. In addition to storing the connection paths through the switch matrix portions of the service termination unit cards 22-1,...,22-p, the system map in the management station 14 also stores the type of service provided on each of the service lines 16 and the type of service which can be accommodated by each of the user lines 18. Therefore, before transmitting a connect command, the management station checks the system map to insure that only a compatible pair of one of the service lines 16 and one of the user lines 18 has been chosen. If an incompatible pair has been selected, the operator is so advised and must change the selection. Thus, telephone service is not provided to a television set.

Accordingly, there has been disclosed an improved cable management system which provides routing of wired services between service lines and user lines under computer control.

## Claims

1. A connection system comprising, a matrix of connections of user lines (18) and service lines (16) for transmitting media specific communications services among the user lines (18), and switches (126) for connecting and disconnecting respective ports (146) for the user lines (18) and respective ports (148) for the service lines (16), characterised by:
a command activated controller (26) coupled to the switches (126) to connect and disconnect the ports (146) with respective ports (148) upon command as generated by a computer, a memory (108) in the controller (26) storing a record of connection and disconnection states of each of the ports (146) and (148), a computer linked to the controller (26) and the memory (108), the computer comprising; an image depicting screen and a graphical user interface capable of identifying the connection and disconnection states of each of the ports (146 and 148) by areas on a corresponding image on the screen, and a command initiating input device of the computer capable of selection of one of the areas by the input device for initiating a command to activate the controller (26) to connect and disconnect selected ports (146 and 148) being identified by the corresponding image.

2. The system according to Claim 1 wherein said switches (126) comprise a matrix of switch cross- points arranged in a rectangular array, each of said crosspoints being at a respective intersection of one of a set of columns of crosspoints and one of a set of rows of crosspoints.

3. The system according to Claim 2 wherein said switches further comprise:
a centerplane board (24);
a first plurality of card edge connectors (36) on a first side of said centerplane board arranged in a first parallel stacked array;
a second plurality of card edge connectors (36) on the other side of said centerplane board arranged in a second parallel stacked array orthogonal to said first parallel array;
means for electrically connecting each of said first plurality of card edge connectors to each of said second plurality of card edge connectors through said centerplane board (24);
means for connecting one set of the sets of columns and rows of said matrix of switch crosspoints to said first plurality of card edge connectors on said first side of said centerplane board;
means (120) for connecting said plurality of service termination means to the other set of the sets of columns and rows of said matrix of switch crosspoints; and
means for connecting said plurality of line termination means to said second plurality of card edge connectors;
whereby any one of said plurality of service lines can be connected to any one of said plurality of user lines through said matrix of switch crosspoints.

4. The system according to Claim 3 wherein each of said first and second pluralities of card edge connectors includes a respective plurality of pin fields and said means for electrically connecting includes a plurality of pin members extending through said centerplane board (24) and into a pin field on each side of said centerplane board.

5. The system according to Claim 4 wherein each of said card edge connectors on each side of said centerplane board includes a pin field corresponding to a respective pin field of each of said card edge connectors on the other side of said centerplane board.

6. The system according to Claim 5 further comprising:
a plurality of service termination unit cards (22) each adapted for mounting to a respective one of said first plurality of card edge connectors, each of said other plurality of service termination unit cards having mounted thereon a respective group of said plurality of service termination means and a respective portion of said matrix of switch crosspoints, and wherein said one set of the sets of columns and rows of said respective portion of said matrix of switch crosspoints is connected to all of the pin fields of said respective one of said first plurality of card edge connectors; and
a plurality of line termination unit cards (20) each adapted for mounting to a respective one of said second plurality of card edge connectors, each of said plurality of line termination unit cards having mounted thereon a respective group of said plurality of line termination means, and wherein each of said respective group of said plurality of line termination means is connected to all of the pin fields of said respective one of said second plurality of card edge connectors.

7. The system according to Claim 5 wherein:
said controller (26) is connected to a predetermined one of said first plurality of card edge connectors;
said system further includes a plurality of conductive bus lines (38) on said centerplane board (24) electrically connected to a respective pin field of each of said first and second pluralities of card edge connectors; and
a respective transceiver means (28, 30, 32) coupled to said respective pin field is provided as part of each of said control means, said plurality of service termination means and said plurality of line termination means for effecting communications therebetween over said bus lines.

8. The system according to Claim 7 wherein said plurality of user lines (18) transmit signals directionally and said plurality of line termination means each includes:
directional cable driver means (110) for passing signals between said plurality of service lines (16) and said plurality of user lines (18); and
means (114) for controlling the directional connection of said cable driver means to the respective one of said plurality of user lines.

9. The system according to Claim 7 wherein said plurality of service lines transmit signals directionally and said plurality of service termination means each includes:
directional cable driver means (130) for passing signals between said plurality of service lines and said plurality of user lines; and
means (128) for controlling the directional connection of said cable driver means to the respective one of said plurality of service lines.

10. The system according to Claim 1 wherein said management station means (14) is connected to said controller (26) and includes memory means for storing the type of service available on each of said plurality of service lines and the type of service which can be accommodated by each of said plurality of user lines, said management station being effective to issue a connect command only when the specified one of said plurality of service lines and the specified one of said plurality of user lines are service compatible.
